# FASCICULE DE BREVET EUROPEEN

(11) **EP 0 694 474 B1**
(45) Date de publication et mention de la délivrance du brevet: **19.11.1997**
(21) Numéro de dépôt: 95401689.5
(22) Date de dépôt: 17.07.1995
(51) Int. Cl.: B64G 1/44, B64G 1/22

(54) **Système pour déployer/replier deux éléments, avec verrouillage par came desdits éléments déployés**
System zum Entfalten/Falten zweier Elemente mit einer Nockenverriegelung der entfalteten Elemente
System for deploying/retracting two elements, having a latch system with a cam for latching these elements when deployed

(30) Priorité: 20.07.1994 FR 9408966
(43) Date de publication de la demande: 31.01.1996
(73) Titulaire: AEROSPATIALE SOCIETE NATIONALE INDUSTRIELLE, 75016 Paris (FR)
(72) Inventeur: Geyer, Freddy, F-83440 Tanneron (FR)
(74) Mandataire: Bonnetat, Christian

(56) Documents cités:
- EP-A- 0 418 131
- DE-A- 4 032 112
- DE-A- 4 336 044
- DE-A- 4 337 968
- FR-A- 2 627 150

## Description

La présente invention concerne un système pour déployer ou replier deux éléments liés en rotation, ainsi que pour verrouiller ou déverrouiller lesdits éléments lorsqu'ils occupent au moins la position déployée.

Plus particulièrement, le système s'applique notamment au domaine spatial pour permettre le déploiement ou le repliement d'éléments ou de structures, tels que des antennes paraboliques, des antennes planes actives, des antennes radar, des panneaux solaires, des mâts d'éloignement et analogues, par rapport à des plate-formes ou stations spatiales, navettes, satellites artificiels, et pour assurer également les fonctions de verrouillage/déverrouillage desdits éléments en position déployée. Bien entendu, le système pourrait trouver des applications dans d'autres domaines techniques, dans lesquels la rotation et le verrouillage dans une position donnée de deux éléments l'un par rapport à l'autre sont à réaliser de façon fiable et sûre.

On sait que le déploiement de grands éléments, tels que ceux énumérés ci-dessus, nécessite, notamment dans le domaine spatial, la réalisation de systèmes qui garantissent, outre une fiabilité remarquable, une absence totale de jeux entre les différentes pièces constituant le système et les éléments, et une rigidité élevée sans faille, lorsque lesdits éléments occupent leur position déployée, verrouillée. Pour cela, un système à verrouillage énergique, répondant à ces exigences, consiste à utiliser une came à profil logarithmique, qui est montée sur un arbre rotatif lié à l'un des éléments et qui permet d'obtenir un effort de verrouillage croissant contre une face d'appui, prévue en correspondance sur l'autre élément. Néanmoins, l'inconvénient d'un tel système de verrouillage est qu'il présente une irréversibilité quasi-totale, ce qui empêche le repliement de l'élément déployé, si nécessaire. En effet, sous l'action de vibrations, de dilatations différentielles dues à l'effet de gradients de température, etc ..., la came à profil logarithmique a tendance spontanément à s'engager de plus en plus contre la face d'appui, provoquant ainsi un coincement de plus en plus énergique.

Aussi, pour remédier à ce problème et continuer à utiliser une came à profil logarithmique pour les avantages qu'elle procure, le système a été amélioré en montant notamment la came de façon excentrée sur l'arbre, comme l'enseigne le brevet français 2 651 843 de la demanderesse.

Le système de verrouillage, qui y est décrit, révèle notamment que :
- ladite came peut tourner autour d'un arbre sur l'axe duquel se trouve l'origine de ladite spirale logarithmique, ledit arbre étant monté rotatif sur ledit premier élément autour d'un axe de rotation excentré à l'opposé de ladite surface de contact de ladite came, par rapport à l'axe dudit arbre ;
- des moyens élastiques sont prévus pour faire tourner ladite came dans un premier sens tel que ladite surface de contact se déplace vers ladite face d'appui ;
- ledit arbre porte un ergot, qui en est solidaire en rotation et qui peut entraîner ladite came en rotation dans un second sens, opposé au premier, ledit ergot n'empêchant pas la rotation de ladite came dans ledit premier sens sous l'action desdits moyens élastiques ; et
- des moyens manuels sont prévus pour pouvoir faire tourner ledit arbre autour dudit axe de rotation excentré, dans ledit second sens.

Ainsi, par l'excentrement des axes de la came et de l'arbre et par les moyens manuels de rotation dudit arbre, on obtient, lorsque les moyens sont actionnés par suite d'une intervention extra-véhiculaire, un éloignement de la surface logarithmique de la came de ladite face d'appui plane, ce qui permet successivement de déverrouiller le second élément en position déployée du premier élément portant la came, puis de ramener vers la position repliée, le second élément contre le premier par un pivotement autour d'un axe d'articulation les reliant.

Bien que ce système de verrouillage évite l'effet de coincement de la came, il n'en demeure pas moins contraignant, dans la mesure où il requiert une intervention manuelle pour déverrouiller la came, puis une nouvelle intervention ultérieure pour replier l'élément déployé vers la position repliée.

La présente invention a pour but de remédier à ces inconvénients.

A cet effet, le système pour déployer ou replier deux éléments liés en rotation et pour verrouiller ou déverrouiller lesdits éléments au moins en position déployée, du type comportant :
- une came, prévue sur le premier des éléments et ayant une surface de contact en forme de spirale logarithmique ;
- une face d'appui plane, prévue sur le second des éléments et contre laquelle est apte à s'appliquer la surface de contact de ladite came ;
- un arbre, sur lequel peut tourner ladite came autour d'un premier axe comprenant l'origine de la spirale, et qui est monté rotatif sur ledit premier élément autour d'un second axe excentré parallèlement au premier axe de rotation de ladite came ;
- des moyens élastiques tendant à faire tourner ladite came dans un premier sens tel que sa surface de contact se déplace vers ladite face d'appui ;
- un doigt, solidaire en rotation dudit arbre et pouvant entraîner ladite came dans un second sens, opposé au premier ; et
- des moyens pour entraîner en rotation ledit arbre, est remarquable, selon l'invention, en ce que lesdits moyens d'entraînement sont motorisés et entraînent également la rotation des deux éléments l'un par rapport à l'autre autour de leur axe d'articulation, et en ce que lesdits moyens comprennent :
- un moteur, dont l'axe de rotation est parallèle aux axes de rotation de la came et dudit arbre et correspond à l'axe d'articulation des deux éléments ;
- une transmission reliant ledit moteur audit arbre ; et
- une liaison radiale, solidaire en rotation dudit moteur et susceptible d'entraîner en rotation ledit second élément autour dudit axe d'articulation.

Ainsi, grâce à l'invention, les moyens d'entraînement forment une articulation motorisée entre les deux éléments, qui permet d'assurer, automatiquement et simultanément, le déploiement/repliement desdits éléments et leur verrouillage/ déverrouillage en position déployée, de façon motorisée, par l'intermédiaire de la liaison radiale et de la transmission, toutes deux liées audit moteur et commandant respectivement le déploiement/repliement des éléments et le verrouillage/déverrouillage de ceux-ci.

Dans un mode préféré de réalisation, ladite transmission reliant ledit moteur audit arbre se compose d'une pluralité de pignons coplanaires, un pignon solidaire en rotation dudit moteur, un pignon solidaire dudit arbre et un pignon intermédiaire reliant les pignons respectifs du moteur et de l'arbre, de façon que le sens de rotation du second élément et de la came, liée à l'arbre, soit identique.

Par exemple, ledit moteur et ledit pignon intermédiaire sont liés audit premier élément.

Quant à ladite liaison radiale reliant ledit moteur audit second élément, elle peut être définie par un bras radial solidaire dudit moteur et dont l'extrémité libre s'engage dans une lumière arquée ménagée dans ledit second élément et ayant pour centre l'axe de rotation dudit moteur. Ladite lumière arquée dudit second élément couvre notamment un angle d'environ 90°.

Par ailleurs, ledit doigt, solidaire en rotation dudit arbre, fait avantageusement saillie de ce dernier, dans une lumière arquée ménagée dans ladite came. Et lesdits moyens élastiques sont de préférence constitués par un ressort de torsion précontraint, monté autour dudit arbre et respectivement relié à ladite came et audit premier élément.

Selon une autre caractéristique dudit système, des moyens de butée sont prévus pour marquer les positions respectives déployée et repliée dudit second élément par rapport au premier. Par exemple, lesdits moyens de butée sont définis par des faces de contact prévues sur ledit second élément mobile, et susceptibles de venir s'appliquer contre des faces correspondantes prévues sur ledit premier élément fixe.

Les figures du dessin annexé feront bien comprendre comment l'invention peut être réalisée. Sur ces figures, des références identiques désignent des éléments semblables.

La figure 1 représente un exemple schématique de réalisation, partiellement en coupe, dudit système conforme à l'invention.

Les figures 2 et 3 sont des vues en coupe dudit système respectivement selon les lignes II-II et III-III de la figure 1.

Les figures 4 à 8 montrent les différentes phases de fonctionnement dudit système, de la position repliée, déverrouillée, desdits éléments jusqu'à leur position déployée, verrouillée, et les figures 9 à 11 montrent les phases de fonctionnement dudit système de la position déployée, déverrouillée desdits éléments vers leur position repliée, déverrouillée.

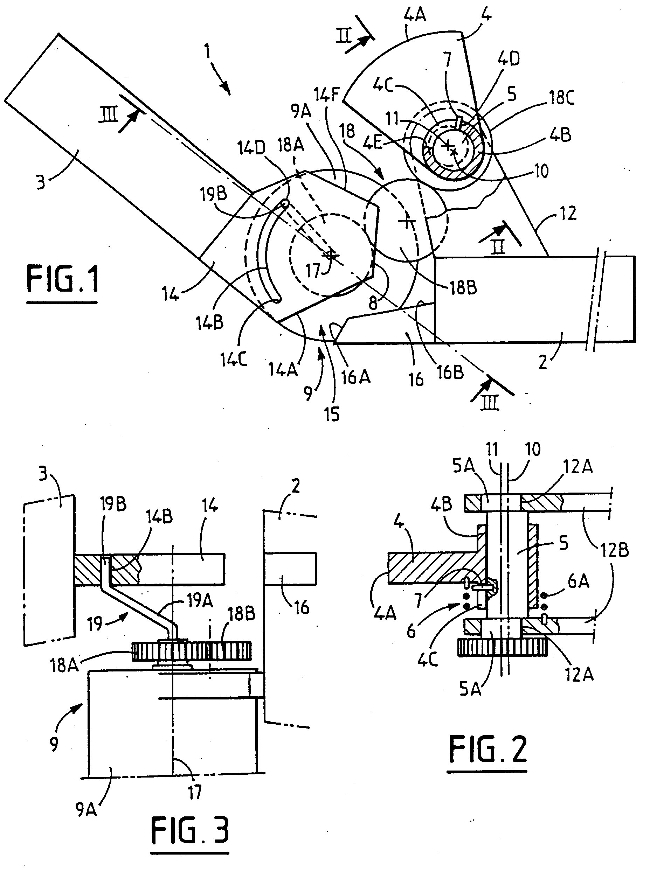

Comme le montrent les figures 1 à 3, le système 1 est destiné à permettre le déploiement et le repliement de deux éléments 2,3 relativement déplaçables en rotation l'un par rapport à l'autre, et le verrouillage et déverrouillage des deux éléments lorsqu'ils occupent la position déployée. Selon le type des éléments en présence, indiqué précédemment, ainsi que leurs dimension et masse, on peut prévoir un ou plusieurs systèmes 1 disposés coaxialement entre les deux éléments pour assurer leur rotation d'une position repliée ou gerbée vers la position déployée et inversement, et leur verrouillage/déverrouillage en position déployée.

Dans cet exemple de réalisation, le système 1 comporte, principalement, une came 4, un arbre 5, des moyens élastiques 6 et un doigt 7 liés au premier 2 desdits éléments, une face d'appui 8 prévue sur le second 3 des éléments, et des moyens rotatifs 9. Plus particulièrement, la came 4 présente, comme le montre la figure 1, une forme de secteur angulaire définissant une surface de contact 4A, qui est conformée en spirale logarithmique et qui est destinée à assurer le verrouillage par contact avec la face d'appui 8. Les caractéristiques et avantages apportés par ce type de profil en spirale logarithmique sont explicités en détail notamment dans le brevet français 2 651 843 de la demanderesse et ne seront donc pas rappelés ici en totalité. Cette came 4 est montée libre en rotation par l'intermédiaire d'une portée cylindrique 4B sur l'arbre 5, autour d'un premier axe géométrique 10, tandis que ce même arbre 5 peut tourner autour d'un second axe géométrique 11 par rapport à une chape 12 solidaire du premier élément, ledit second axe 11 étant excentré parallèlement dudit premier axe 10. Pour cela, l'arbre 5 est porté par ses extrémités en forme de tourillons 5A centrés sur le second axe 11, dans des paliers 12A prévus dans les flasques parallèles 12B de la chape 12, comme le montre la figure 2. Les moyens élastiques 6 sont réalisés sous la forme d'un ressort de torsion précontraint 6A et tendent à faire pivoter la came 4 dans un premier sens de rotation, de façon que sa surface de contact 4A se déplace vers la face d'appui 8 du second élément. En particulier, le ressort est monté autour de la came et s'engage, d'un côté, sur celle-ci et, de l'autre côté, sur le flasque correspondant de la chape, de sorte que, sous l'action du ressort précontraint 6A, la came 4 a tendance à tourner autour du premier axe géométrique 10 de l'arbre 5.

Le doigt 7 est solidaire en rotation de l'arbre 5 et il fait saillie radialement vers l'extérieur de celui-ci. On voit sur les figures 1 et 2, qu'il émerge ainsi dans une lumière arquée 4C ménagée dans la portée cylindrique 4B de la came, de façon à pouvoir entraîner en rotation la came dans un second sens de rotation, opposé au premier, tout en empêchant la rotation de la came dans le premier sens sous l'action du ressort, grâce à la lumière arquée, comme on le verra ultérieurement.

En ce qui concerne la face d'appui 8, elle est plane et rectiligne et termine une ferrure 14, qui est solidaire de l'élément 3 et qui est disposée dans un même plan que le plan de la came 4, pour que la surface de contact 4A de cette dernière coopère parfaitement avec la face d'appui plane 8 de la ferrure.

Par ailleurs, pour marquer les positions déployée et repliée des deux éléments 2 et 3, comme on le verra par la suite, pour lesquelles ceux-ci sont respectivement alignés ou gerbés, des moyens de butée 15 sont prévus. Concernant la position déployée, ils sont constitués par une face de contact 16A, terminant une patte 16 solidaire du premier élément 2, et par une face de contact 14A, contiguë à la face d'appui 8, de la ferrure 14 dudit second élément 3. Concernant la position repliée, les moyens de butée sont formés par une autre face de contact 16B de la patte 16 et par une face 14F, opposée à la face 14A par rapport à la face d'appui 8.

Quant aux moyens rotatifs 9, ils sont avantageusement du type motorisés et définis par un moteur électrique 9A qui autorise l'entraînement en rotation, d'une part, des deux éléments 2 et 3 l'un par rapport à l'autre autour d'un axe 17 parallèle aux axes 10 et 11, et d'autre part de l'arbre 5 portant la came de verrouillage 8. Dans cette réalisation, l'axe de rotation 17 du moteur correspond à l'axe d'articulation des deux éléments. Le moteur 9A desdits moyens est alors relié à l'arbre 5 par une transmission 18 qui se compose d'un pignon moteur 18A, accouplé en sortie du moteur, d'un pignon intermédiaire 18B et d'un pignon 18C solidaire de l'arbre 5 à l'une de ses extrémités 5A. Par ces trois pignons coplanaires, la rotation dans un sens de l'élément 3 par rapport à l'élément 2 entraîne la rotation de l'arbre 5 et, donc, de la came 4, dans le même sens. Le moteur 9A est par exemple fixé à l'élément 2 et le pignon intermédiaire 18B est porté, par une chape non représentée, par l'élément 2 également.

Une liaison radiale 19 assure le déplacement en rotation du second élément 3 par rapport au moteur 9A et, pour cela, un bras radial 19A est solidaire de l'axe du moteur et s'engage, par un doigt 19B qui termine son extrémité libre, dans une lumière arquée 14B qui est ménagée dans la ferrure 14 et qui couvre un angle d'environ 90° entre ses extrémités arrondies 14C et 14D, par rapport à l'axe 17.

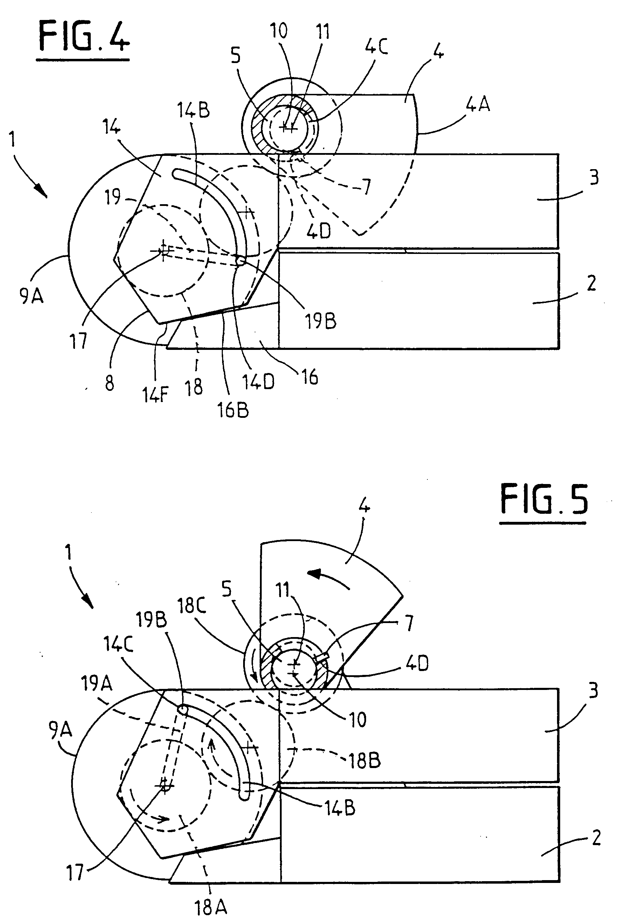

Le fonctionnement du système conforme à l'invention sera décrit ci-après en regard des figures 4 à 11.

Tout d'abord, on suppose que ledit système 1 occupe la position illustrée sur la figure 4, pour laquelle les deux éléments 2 et 3, tels que des panneaux ou autres, sont repliés ou gerbés l'un contre l'autre. La face d'appui 14F de la ferrure se trouve contre la face d'appui 16B de la patte 16. La came 4 est alors escamotée sous l'action du doigt d'entraînement 7 solidaire de l'arbre 5 et lié cinématiquement à l'axe 17 du moteur 9, par la transmission 18. Le ressort de torsion ou de rappel 6A, qui est bandé, presse l'extrémité 4D de la lumière 4C de la came, contre le doigt d'entraînement 7. Quant au doigt 19B du bras radial 19A reliant le moteur 9A à la ferrure 14 du second élément, il est au contact de l'extrémité arrondie 14D de la lumière arquée 14B.

Puis, l'ordre de commande du système est donné de façon à assurer le déploiement et le verrouillage des deux éléments en position déployée, comme le montre la figure 5. La rotation de l'axe 17 du moteur 9A provoque simultanément, d'une part, une rotation de 90° du doigt 19B dans la lumière 14B jusqu'à venir au contact de l'autre extrémité arrondie 14C de celle-ci, les éléments 2 et 3 restant alors en position repliée et, d'autre part, une rotation angulairement identique de la came 4 par l'intermédiaire de la transmission 18 (pignons 18A, 18B, 18C) et de l'arbre 5, autour de l'axe 11. La came 4, sous l'action du ressort de torsion 6A, reste en contact avec le doigt d'entraînement 7, par l'extrémité 4D de sa lumière 4C. Cette rotation du moteur, sans effet sur la rotation de l'élément 3 du fait de la lumière 14B, permet de manoeuvrer déjà la came 4 qui était initialement escamotée.

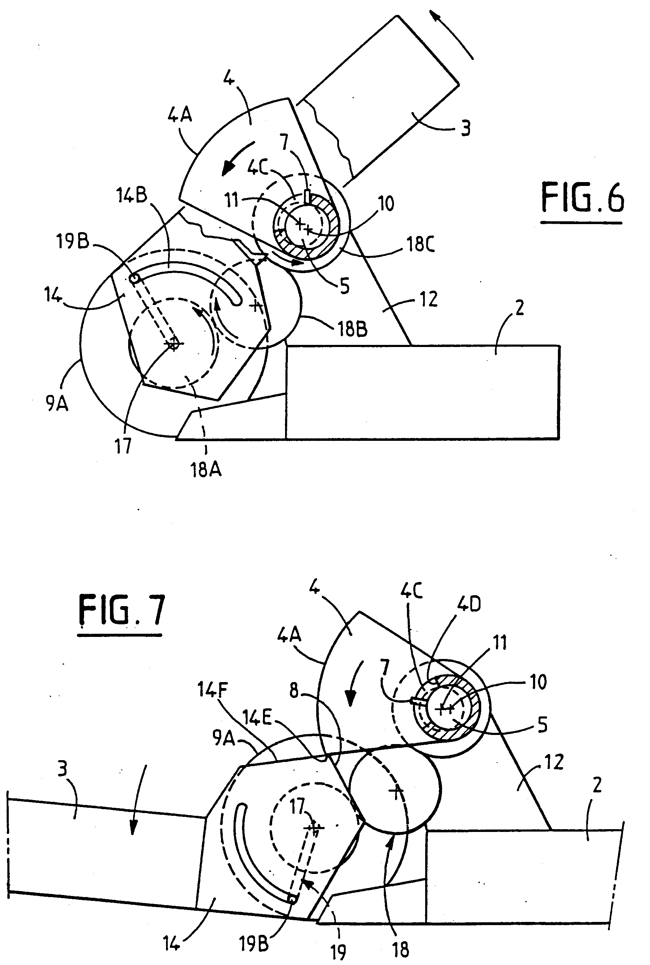

Comme le montre ensuite la figure 6, sous l'action du doigt 19B de la liaison radiale 19, s'appliquant contre l'extrémité arrondie 14C de la lumière 14B, le second élément 3 commence sa rotation autour de l'axe 17 et, donc, son passage vers la position déployée. Durant cette phase, la came 4 reste en contact avec le doigt d'entraînement 7 par l'action du ressort de torsion 6A tout en tournant autour de l'axe 11 par l'intermédiaire de la transmission et de l'arbre 5. Les sens de rotation de la came 4, de l'élément 3 et de la transmission 18 sont indiqués par des flèches.

L'entraînement en rotation, sous l'action du moteur 9A, de l'élément 3, via la liaison radiale 19, et de l'arbre 5, via la transmission 18, se poursuit, comme l'illustre la figure 7. La came 4 arrive alors à proximité de la ferrure 14 et s'applique contre une butée 14E prévue sur cette dernière et constituée par le bord de la face de contact 14F, contiguë à la face d'appui 8 et opposée à la face de contact 14A. Le second élément 3 est alors presque aligné avec le premier élément 2. Cette action de contact came 4 - ferrure 14 a pour conséquence de comprimer le ressort de torsion 6A de la came 4, sous la rotation de l'arbre 5 qui se poursuit grâce à la lumière arquée 4C ménagée dans la came. Le doigt 7 de l'arbre s'éloigne alors de l'extrémité 4D de la lumière 4C.

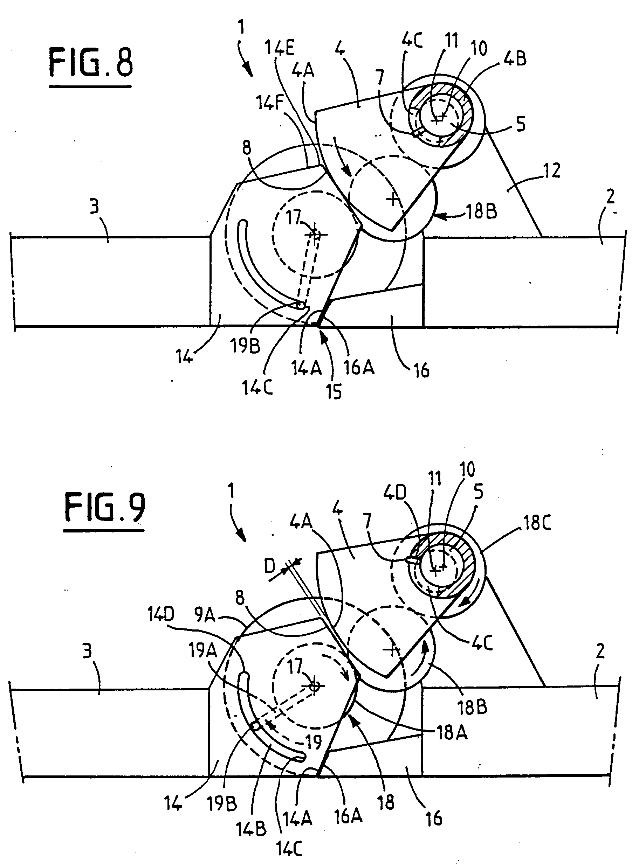

Grâce au profil du bord formant butée 14E et à la suite de la rotation de l'élément 3, avant que celui-ci n'arrive en position totalement déployée, la surface de contact 4A de la came 4, tournant autour du premier axe 10 sous l'action de son ressort de torsion 6A, s'engage sur la face d'appui 8 de la ferrure. Le mouvement de rotation de l'élément 3 poussé par le doigt 19B de la liaison 19 continue, jusqu'à ce que la face de contact 14A du second élément s'applique contre la face de contact 16A, formant butée, du premier élément, marquant ainsi la position déployée et alignée du second élément 3 par rapport au premier élément 2. Simultanément à cette fin de phase, la surface d'appui à profil logarithmique 4A de la came s'applique contre la face d'appui 8 en exerçant alors, grâce à son profil logarithmique, un effort de serrage croissant imprimé par l'énergie motrice du ressort de torsion 6A. On réalise alors, comme le montre la figure 8, un verrouillage énergique de l'élément 3 en position déployée, par rapport à l'élément 2, en supprimant, en outre, tout jeu dimensionnel susceptible d'apparaître entre les différentes pièces constituant le système 1, par suite de dilatations thermiques, vibrations, etc ...

On remarque donc sur la figure 8 que, dans la position déployée et verrouillée desdits éléments, la surface de contact 4A de la came presse la face d'appui 8 de la ferrure, les faces de butée 14A et 16A sont en contact l'une avec l'autre, le doigt 19B du bras radial est au contact de l'extrémité arrondie 14C de la lumière arquée 14A, et le doigt d'entraînement 7 est situé sensiblement au milieu de la lumière 4C de la came.

Pour effectuer, si nécessaire, le passage de la position déployée et verrouillée des éléments 2,3 vers la position repliée, déverrouillée, le moteur 9A desdits moyens 9 est actionné dans un sens de rotation inverse, comme le montre la figure 9. D'une part, le doigt 19B de la liaison radiale 19, solidaire de l'axe d'articulation 17 du moteur, s'éloigne de l'extrémité arrondie 14C de la lumière 14B, en n'ayant aucune action sur l'élément 3. D'autre part, la transmission 18 (pignons 18A, 18B, 18C) provoque la rotation de l'arbre 5 autour de l'axe 11, à l'encontre du ressort de torsion 6A. En conséquence, du fait de l'excentricité entre les axes 10 et 11, correspondant respectivement à ceux de la came 4 et de l'arbre 5 dans la chape 12, la surface de contact 4A de ladite came s'éloigne, durant ce déplacement angulaire limité, de la face d'appui 8 de la ferrure, d'une distance D selon la normale au plan de la face d'appui 8 de la ferrure. La came 4, sous l'action de son ressort de rappel en torsion 6A, a tendance à s'opposer au sens de rotation imposé pour s'engager naturellement davantage (c'est-à-dire à verrouiller vers la face d'appui), mais la rotation de l'arbre 5 s'y oppose et se poursuit, de sorte que, par l'engagement du doigt d'entraînement 7 venant au contact de l'extrémité 4D de la lumière par la rotation de l'arbre 5, la came 4 se dégage du plan d'appui 8 de la ferrure avant que le doigt 19B n'arrive en fin de course contre l'extrémité arrondie 14D de la lumière 14B. L'éloignement de la came d'une distance D permet ainsi, sous un couple moteur réduit et par l'excentricité des axes, de supprimer rapidement les efforts internes sources de coincement du système, lorsqu'il est verrouillé énergiquement. De plus, on s'arrange pour que la réaction de l'effort de la face d'appui 8 sur la surface de contact 4A de la came passe sensiblement par les axes 10 et 11 (aux dispersions près d'angle de frottement), de sorte que l'effort à fournir par le moteur est très faible.

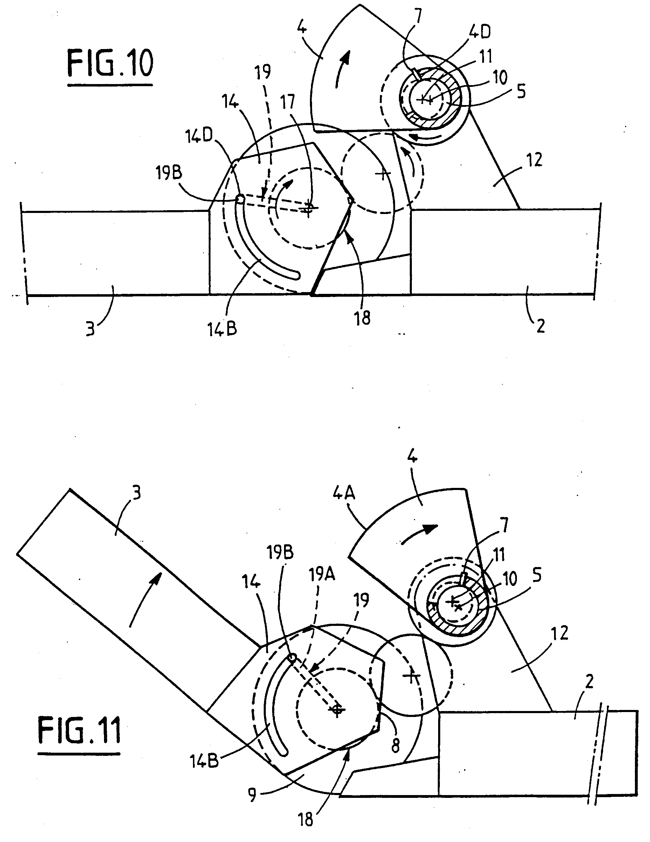

A ce moment, comme le montre la figure 10, la came 4 a pivoté d'environ 45°, tandis que l'élément 3 est encore aligné, le doigt 19B entrant au contact de l'extrémité arrondie de la lumière 14B. La rotation, imprimée par le moteur 9, la liaison radiale 19 et la transmission 18, se poursuit selon le sens de rotation indiqué par les flèches et provoque simultanément le repliement de l'élément 3 autour de l'axe d'articulation 17 et l'escamotage de la came 4, comme indiqué sur la figure 11 qui est analogue à la figure 1.

Le système 1 retrouve ensuite sa position initiale illustrée sur la figure 4 pour laquelle les deux éléments sont en position gerbée, déverrouillée.

## Revendications

1. Système pour déployer ou replier deux éléments liés en rotation et pour verrouiller ou déverrouiller lesdits éléments au moins en position déployée, du type comportant :
- une came (4), prévue sur le premier (2) des éléments et ayant une surface de contact (4A) en forme de spirale logarithmique ;
- une face d'appui plane (8), prévue sur le second (3) des éléments et contre laquelle est apte à s'appliquer la surface de contact de ladite came ;
- un arbre (5), sur lequel peut tourner ladite came autour d'un premier axe (10) comprenant l'origine de la spirale, et qui est monté rotatif sur ledit premier élément autour d'un second axe (11) excentré parallèlement au premier axe de rotation de ladite came ;
- des moyens élastiques (6) tendant à faire tourner ladite came dans un premier sens tel que sa surface de contact se déplace vers ladite face d'appui ;
- un doigt (7), solidaire en rotation dudit arbre et pouvant entraîner ladite came dans un second sens, opposé au premier ; et
- des moyens (9) pour entraîner en rotation ledit arbre,
caractérisé en ce que lesdits moyens d'entraînement (9) sont motorisés et entraînent également la rotation des deux éléments l'un par rapport à l'autre autour de leur axe d'articulation, et en ce que lesdits moyens comprennent :
- un moteur (9A), dont l'axe de rotation (17) est parallèle aux axes de rotation (10, 11) de la came et dudit arbre, et correspond à l'axe d'articulation des deux éléments ;
- une transmission (18) reliant ledit moteur audit arbre ; et
- une liaison radiale (19), solidaire en rotation dudit moteur et susceptible d'entraîner en rotation ledit second élément autour dudit axe d'articulation.

2. Système selon la revendication 1,
caractérisé en ce que ladite transmission (18) reliant ledit moteur audit arbre se compose d'une pluralité de pignons coplanaires, un pignon (18A) solidaire en rotation dudit moteur (9A), un pignon (18C) solidaire dudit arbre (5) et un pignon intermédiaire (18B) reliant les pignons respectifs du moteur et de l'arbre, de façon que le sens de rotation du second élément et de la came, liée à l'arbre, soit identique.

3. Système selon la revendication 2,
caractérisé en ce que ledit moteur (9A) et ledit pignon intermédiaire (18B) sont liés audit premier élément.

4. Système selon l'une des revendications précédentes 1 à 3,
caractérisé en ce que ladite liaison radiale (19) reliant ledit moteur audit second élément est définie par un bras radial (19A) solidaire dudit moteur et dont l'extrémité libre (19B) s'engage dans une lumière arquée (14B) ménagée dans ledit second élément et ayant pour centre l'axe de rotation (17) dudit moteur.

5. Système selon la revendication 4,
caractérisé en ce que ladite lumière arquée (14B) dudit second élément couvre un angle d'environ 90°.

6. Système selon l'une des revendications précédentes 1 à 5,
caractérisé en ce que ledit doigt (7), solidaire en rotation dudit arbre, fait saillie de ce dernier, dans une lumière arquée (4C) ménagée dans ladite came.

7. Système selon l'une des revendications précédentes 1 à 6,
caractérisé en ce que lesdits moyens élastiques (6) sont constitués par un ressort de torsion précontraint (6A), monté autour dudit arbre (5) et respectivement relié à ladite came (4) et audit premier élément (2).

8. Système selon l'une quelconque des revendications précédentes 1 à 7,
caractérisé en ce que des moyens de butée (15) sont prévus pour marquer les positions respectives déployée et repliée dudit second élément (3) par rapport au premier (2).

9. Système selon la revendication 8,
caractérisé en ce que lesdits moyens de butée (15) sont définis par des faces de contact (14A, 14F) prévues sur ledit second élément mobile, et susceptibles de venir s'appliquer contre des faces correspondantes (16A, 16B) prévues sur ledit premier élément fixe.

## Claims

1. System for unfolding or folding up two elements which are linked in rotation and for locking or unlocking the said elements at least in the unfolded position, of the type including:
- a cam (4), provided on the first (2) of the elements and having a contact surface (4A) in the shape of logarithmic spiral;
- a flat bearing face (8) provided on the second (3) of the elements and against which the contact surface of the said cam can press;
- a shaft (5), on which the said cam can turn about a first axis (10) containing the origin of the spiral, and which shaft is mounted so that it can rotate on the said first element about a second axis (11) which is offset parallel to the first axis of rotation of the said cam;
- elastic means (6) tending to make the said cam turn in a first direction such that its contact surface moves towards the said bearing face;
- a finger (7), integral in terms of rotation with the said shaft and capable of driving the said cam in a second direction, opposite to the first; and
- means (9) for driving the said shaft in rotation,
characterized in that the said drive means (9) are motorized and also drive the rotation of the two elements one with respect to the other about the axis about which they are articulated, and in that the said means comprise:
- a motor (9A), the axis of rotation (17) of which is parallel to the axes of rotation (10, 11) of the cam and of the said shaft, and corresponds to the axis about which the two elements are articulated;
- a transmission (18) linking the said motor to the said shaft; and
- a radial link (19), integral in terms of rotation with the said motor and able to drive the said second element in rotation about the said axis of articulation.

2. System according to Claim 1, characterized in that the said transmission (18) linking the said motor to the said shaft is composed of a plurality of coplanar gearwheels, a gearwheel (18A) integral in terms of rotation with the said motor (9A), a gearwheel (18C) integral with the said shaft (5) and an intermediate gearwheel (18B) linking the respective gearwheels of the motor and of the shaft so that the direction of rotation of the second element and of the cam, linked to the shaft, is identical.

3. System according to Claim 2, characterized in that the said motor (9A) and the said intermediate gearwheel (18B) are linked to the said first element.

4. System according to one of the preceding Claims 1 to 3, characterized in that the said radial link (19) linking the said motor to the said second element is defined by a radial arm (19A) integral with the said motor and the free end (19B) of which engages in a curved slot (14B) formed in the said second element and the centre of which is the axis of rotation (17) of the said motor.

5. System according to Claim 4, characterized in that the said curved slot (14B) of the said second element covers an angle of approximately 90°.

6. System according to one of the preceding Claims 1 to 5, characterized in that the said finger (7), integral in terms of rotation with the said shaft, projects from the latter into a curved slot (4C) formed in the said cam.

7. System according to one of the preceding Claims 1 to 6, characterized in that the said elastic means (6) consist of a prestressed torsion spring (6A) mounted around the said shaft (5) and respectively linked to the said cam (4) and to the said first element (2).

8. System according to any one of the preceding Claims 1 to 7, characterized in that stop means (15) are provided to mark the respective unfolded and folded-up positions of the said second element (3) with respect to the first (2).

9. System according to Claim 8, characterized in that the said stop means (15) are defined by contact faces (14A, 14F) provided on the said mobile second element, and able to press against corresponding faces (16A, 16B) provided on the said stationary first element.

## Patentansprüche

1. System zum Entfalten oder Falten von zwei drehbar miteinander verbundenen Elementen und zum Ver- oder Entriegeln dieser Elemente zumindest in entfalteter Stellung, der Art, daß es umfaßt:
- einen Nocken (4) am ersten Element (2) mit einer Kontaktfläche (4A) in Form einer logarithmischen Spirale;
- eine ebene Auflagefläche (8) am zweiten Element (3), an die sich die Kontaktfläche des Nockens anlegen kann;
- eine Welle (5), an der sich der Nocken um eine erste Achse (10) mit dem Anfang der Spirale drehen kann und die am ersten Element drehbar um eine zweite exzentrische Achse (11) parallel zur ersten Drehachse des Nockens angebracht ist;
- flexible Mittel (6), durch die sich der Nocken in eine erste Richtung drehen kann, so daß sich seine Kontaktfläche zur Auflagefläche bewegt;
- einen drehbar mit der Welle verbundenen Finger (7), durch den der Nocken in eine zweite Richtung, entgegengesetzt zur ersten, bewegt werden kann; und
- Mittel (9), um die Welle in Drehung zu versetzen,
dadurch gekennzeichnet, daß die Antriebsmittel (9) einen Motor haben und auch die Drehbewegung der beiden Elemente zueinander um ihre Gelenkachse bewirken, und dadurch, daß die Mittel umfassen:
- einen Motor (9A), dessen Drehachse (17) parallel zu den Drehachsen (10,11) des Nockens und der Welle verläuft und der Gelenkachse der beiden Elemente entspricht;
- ein Getriebe (18), durch das der Motor mit der Welle verbunden ist; und
- eine radiale Verbindung (19), die drehbar mit dem Motor verbunden ist und das zweite Element um die Gelenkachse in Drehung versetzen kann.

2. System nach Anspruch 1,
dadurch gekennzeichnet, daß das Getriebe (18) zwischen dem Motor und der Welle aus mehreren koplanaren Ritzeln, einem drehbar mit dem Motor (9A) verbundenen Ritzel (18A), einem drehbar mit der Welle (5) verbundenen Ritzel (18C) und einem Zwischenritzel (18B) zur Verbindung der Ritzel von Motor bzw. Welle besteht, so daß die Drehrichtung des zweiten Elements und des mit der Welle verbundenen Nockens identisch ist.

3. System nach Anspruch 2,
dadurch gekennzeichnet, daß der Motor (9A) und das Zwischenritzel (18B) mit dem ersten Element verbunden sind.

4. System nach einem der obigen Ansprüche 1 bis 3,
dadurch gekennzeichnet, daß die radiale Verbindung (19) zur Verbindung des Motors mit dem zweiten Element aus einem mit dem Motor verbundenen radialen Arm (19A) besteht, dessen freies Ende (19B) in einen bogenförmigen Schlitz (14B) im zweiten Element eingreift und dessen Mittelpunkt die Drehachse (17) des Motors ist.

5. System nach Anspruch 4,
dadurch gekennzeichnet, daß der bogenförmige Schlitz (14B) des zweiten Elements einen Winkel von etwa 90° beschreibt.

6. System nach einem der obigen Ansprüche 1 bis 5,
dadurch gekennzeichnet, daß der drehbar mit der Welle verbundene Finger (7) an dieser innerhalb eines bogenförmigen Schlitzes (4C) im Nocken übersteht.

7. System nach einem der obigen Ansprüche 1 bis 6,
dadurch gekennzeichnet, daß die flexiblen Mittel (6) aus einer vorgespannten Torsionsfeder (6A) bestehen, die um die Welle (5) herum angebracht und mit dem Nocken (4) bzw. mit dem ersten Element (2) verbunden ist.

8. System nach einem der obigen Ansprüche 1 bis 7,
dadurch gekennzeichnet, daß Anschlagmittel (15) vorgesehen sind, durch die die entfaltete bzw. gefaltete Stellung des zweiten Elements (3) gegenüber dem ersten Element (2) bestimmt wird.

9. System nach Anspruch 8,
dadurch gekennzeichnet, daß die Anschlagmittel (15) aus Kontaktflächen (14A, 14F) am zweiten beweglichen Element bestehen, die sich an die entsprechenden Flächen (16A, 16B) am ersten feststehenden Element anlegen können.
